# FASCICULE DE BREVET EUROPEEN

(11) **EP 2 248 716 B1**
(45) Date de publication et mention de la délivrance du brevet: **03.06.2015**
(21) Numéro de dépôt: 10305444.1
(22) Date de dépôt: 28.04.2010
(51) Int. Cl.: B62K 21/16

(54) **Potence de cycle à inclinaison réglable**
Fahrradlenkervorbau mit einstellbarer Neigung
Bicycle stem with adjustable inclination

(30) Priorité: 30.04.2009 FR 0952877
(43) Date de publication de la demande: 10.11.2010
(73) Titulaire: Look Cycle International, 58000 Nevers (FR)
(72) Inventeur: Servet, Sébastien, 58000, NEVERS (FR)
(74) Mandataire: Laget, Jean-Loup

(56) Documents cités:
- US-A- 5 477 747
- US-A- 5 515 744
- US-A1- 2009 079 160

## Description

La présente invention concerne une potence de cycle à inclinaison réglable. La potence porte à l'une des ses extrémités le guidon du cycle et est à son extrémité opposée fixée à la partie supérieure du tube pivot monté rotatif dans la douille de direction du cadre de cycle.

L'avantage de l'inclinaison réglable de la potence réside dans le fait qu'elle peut être adaptée pour être commode à des personnes prenant une position différente sur le cycle.

Afin de pouvoir régler l'inclinaison de la potence, les moyens de fixation de la potence au tube pivot comportent des moyens d'articulation comme cela est connu par exemples des publications CN200992282, US5327798 ou US5842385.

On connaît également de la publication US 2009/079160 une potence de cycle à inclinaison réglable dans laquelle deux organes de serrage cylindriques sont utilisés qui s'étendent axialement à l'intérieur d'un trou de réception d'un tube pivot à l'extrémité de la potence. Ces deux organes de serrage sont pourvus d'un hémisphère convexe respectif qui coopère avec un évidement correspondant prévu dans un logement de manière à former une articulation permettant de régler l'inclinaison de la potence. Cependant, cette configuration est extrêmement compliquée à mettre en oeuvre, d'autant plus que le réglage de l'inclinaison est difficile à effectuer à cause du serrage d'une vis qui comprime le jeu de direction, créant ainsi un frottement important entre les hémisphères et les évidements de la potence. Il sera donc nécessaire de desserrer le jeu de direction pour régler l'inclinaison de la potence. Un autre inconvénient de cette potence est qu'elle ne permet pas la présence de striures ou de dents sur les surfaces en contact, ce qui autrement permettrait un meilleur maintien des éléments et un réglage par indexation.

Ainsi, toutes les potences connues de ce genre sont relativement compliquées par leur construction et comportent un grand nombre de pièces à assembler, ce qui entraîne un poids et un coût élevés et souvent aussi une perte de rigidité de l'ensemble.

Afin d'obtenir un réglage de la longueur de la potence pour éviter, dans une certaine mesure, de fabriquer une gamme de potences de différentes longueurs, le US5842385 propose en outre de loger le guidon dans un insert à trou excentrique. Cependant, le réglage est relativement compliqué à effectuer puisqu'en faisant tourner l'insert, on modifie aussi l'angle d'inclinaison de la potence.

Par ailleurs, le choix de la hauteur des potences conventionnelles s'effectue en coupant le tube pivot à la longueur désirée et on place ensuite des inserts annulaires entre la potence et le tube de direction. Cette hauteur est ainsi réglable en jouant sur le nombre d'inserts.

Le but de l'invention est de proposer une potence de cycle à réglage de l'inclinaison de la potence simplifié, qui comporte très peu de pièces et qui apporte une rigidité améliorée à l'ensemble.

Un autre but de l'invention est de proposer une potence ce cycle comportant des moyens simples de réglage de la longueur de la potence.

L'objet de l'invention est une potence de cycle à inclinaison réglable, comprenant un corps de potence dont l'une des extrémités est pourvue de premiers moyens de fixation de la potence à l'extrémité haute d'un tube pivot et dont l'extrémité opposée est pourvue de deuxièmes moyens de fixation d'un guidon à la potence, lesdits premiers moyens de fixation comprenant des moyens d'articulation permettant de régler l'inclinaison de la potence, et des moyens de serrage permettant de bloquer la potence en une position angulaire souhaitée, lesdits moyens de serrage comportant un premier et un deuxième organes de serrage de forme globalement hémicylindrique s'étendant dans un logement présentant une ouverture dirigée vers le bas afin d'y permettre l'introduction du tube pivot, lesdits premier et deuxième organes de serrage étant à leurs extrémités haute et basse respectives pourvus d'un évidement de réception adapté à la périphérie du tube pivot, caractérisée par le fait que lesdits premier et deuxième organes de serrage s'étendent transversalement dans ledit logement qui présente une paroi au moins partiellement cylindrique coopérant avec ledit premier organe de serrage afin de définir ensemble lesdits moyens d'articulation. De plus:
- ledit deuxième organe de serrage est sollicité vers ledit premier organe de serrage par un organe formant coin déplaçable transversalement dans ledit logement;
- ledit organe formant coin présente une surface d'appui cylindrique épousant la forme extérieure dudit deuxième organe de serrage;
- un organe formant coin est disposé des deux côtés du corps de potence et les deux organes formant coin sont reliés l'un à l'autre par une vis de serrage.
   Selon d'autres caractéristiques de l'invention:
- ledit logement est ouvert latéralement des deux côtés du corps de potence;
- lesdits évidements de réception desdits premier et deuxième organes de serrage sont prolongés vers le haut respectivement vers le bas par un rebord saillant respectif définissant une surface d'appui élargie pour le tube pivot;
- lesdits rebords font saillie dans une gorge du logement dans ladite au moins une partie cylindrique de celui-ci de manière à constituer des moyens de blocage transversal desdits premier et deuxième organes de serrage lorsque le tube pivot est introduit dans le logement et serré entre lesdits organes de serrage;
- lesdits deuxièmes moyens de fixation comportent une chape en forme de U qui à l'une de ses extrémités est articulée sur le corps de potence pour être rabattue sur un évidement prévu à l'extrémité avant du corps de potence pour la réception du guidon afin d'enserrer celui-ci, et qui à son extrémité opposée porte des premiers moyens de liaison aptes à être reliés à des deuxièmes moyens de liaison prévus sur le corps de potence;
- la longueur de la potence peut être modifiée à l'aide d'au moins une entretoise en forme de croissant disposée dans la forme en U de la chape pour l'obtention d'une longueur réduite de la potence ou dans ledit évidement de réception à l'extrémité avant du corps de potence pour l'obtention d'une longueur plus importante;
- une entretoise en forme de croissant est disposée de chaque côté latéral du corps de potence et les deux entretoises sont reliées l'une à l'autre par des organes de liaison mâles et femelles s'étendant transversalement pour être emboîtés les uns dans les autres; et
- lesdits organes mâles et femelles sont retenus les uns dans les autres par encliquetage.

D'autres caractéristiques et avantages de l'invention ressortiront de la description qui va suivre d'un mode de réalisation non limitatif de l'invention, en référence aux figures annexées dans lesquelles :
- la figure 1 est une vue latérale partielle d'un cycle pourvu d'une potence selon l'invention;
- la figure 2 est une vue en perspective éclatée de la potence selon l'invention;
- la figure 3 est une coupe longitudinale de la potence selon la ligne III-III de la figure 7, assemblée et fixée sur un tube pivot et portant un guidon;
- la figure 4 est une coupe transversale de la potence selon la ligne IV-IV de la figure 3;
- les figures 5 et 6 sont des vues latérales schématiques montrant la potence selon l'invention dans deux positions extrêmes sur le tube pivot;
- la figure 7 est une vue en perspective illustrant la potence à longueur réduite; et
- la figure 8 est une vue en perspective illustrant la potence à longueur augmentée.

Dans les figures, les éléments identiques ou équivalents porteront les mêmes signes de référence.

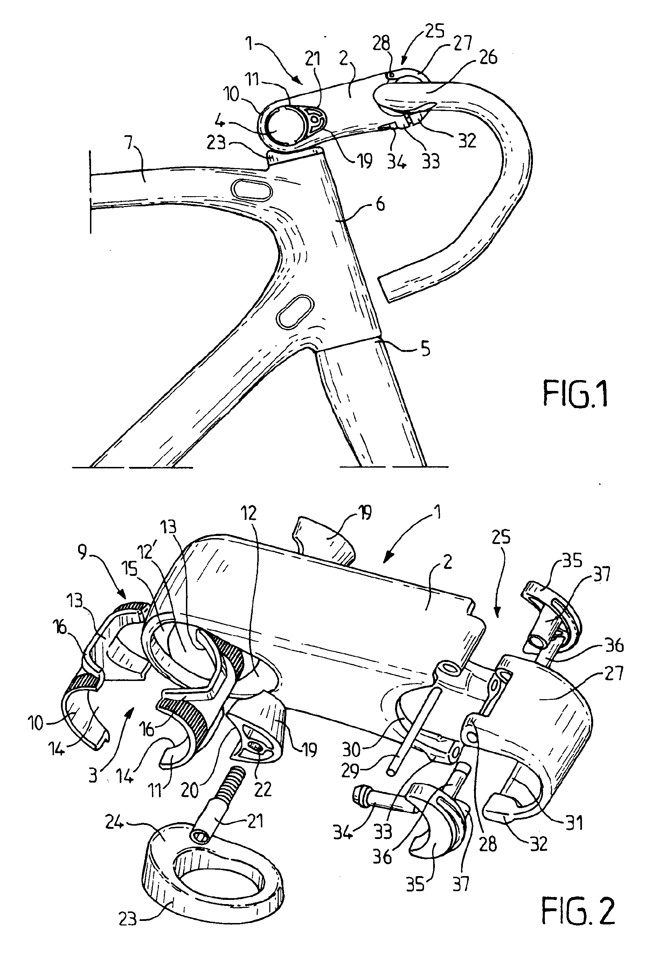

Les éléments constitutifs de la potence 1 selon l'invention sont montrés à la figure 2.

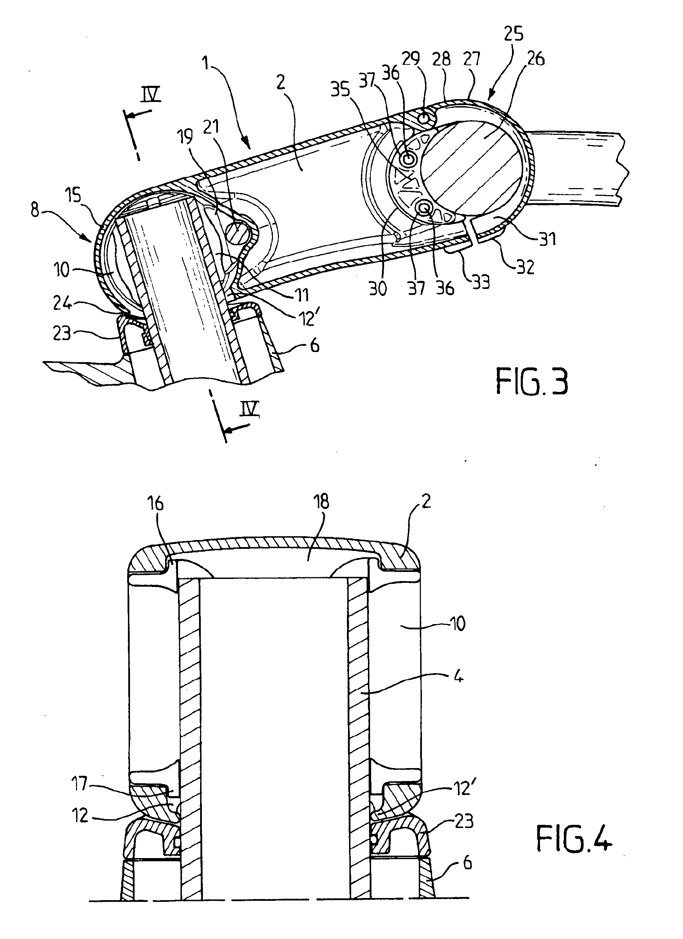

On y distingue le corps de potence 2 qui est un corps creux, de préférence en carbone compressé, présentant la forme d'un boîtier aux extrémités arrondies (voir figures 1 et 3).

L'extrémité arrière du corps de potence 2 est pourvue de premiers moyens de fixation 3 de la potence 1 à l'extrémité haute d'un tube pivot de fourche 4 qui à son tour est fixé à la tête de fourche 5 et monté pivotant dans le tube de direction 6 faisant partie du cadre 7 du cycle.

Les moyens de fixation 3 comprennent en outre des moyens d'articulation 8 permettant de régler l'inclinaison de la potence 1, ainsi que des moyens de serrage 9 permettant de bloquer la potence 1 dans une position souhaitée.

Selon une caractéristique importante de l'invention, les moyens de serrage 9 comportent un premier (10) et un deuxième (11) organes de serrage de forme globalement hémicylindrique s'étendant transversalement dans un logement 12 prévu à l'extrémité arrière de la potence 1.

Le logement 12 présente une ouverture 12' dirigée vers le bas afin d'y permettre l'introduction du tube pivot 4. Les premier et deuxième organes de serrage 10, 11 sont à leur extrémités haute et basse respectives pourvus d'un évidement de réception 13 respectivement 14 adaptés à la périphérie du tube pivot 4. Le logement 12 présente une paroi 15 au moins partiellement cylindrique apte à coopérer avec le premier organe de serrage 10 de manière à définir ensemble les moyens d'articulation 8.

Par ailleurs, les évidements de réception 13, 14 prévus dans les premier et deuxième organes de serrage 10, 11 sont avantageusement prolongés vers le haut respectivement vers le bas par un rebord saillant respectif 16, 17 (voir figure 4) pour définir une surface d'appui élargie pour le tube pivot 4.

Avantageusement, ces rebords saillants 16, 17 font saillie dans une gorge 18 du logement 12 (voir figure 4) de manière à constituer des moyens de blocage transversal des premier et deuxième organes de serrage 10, 11 lorsque le tube pivot 4 est introduit dans le logement 12 de manière à appuyer contre la paroi des évidements hauts et bas 13, 14 des premier et deuxième organes de serrage 10, 11.

Pour le serrage du tube pivot 4 par les premier et deuxième organes de serrage 10, 11, le deuxième organe de serrage 11 est sollicité vers le premier organe de serrage par deux organes formant coin 19 déplaçables transversalement dans le logement 12.

Chaque organe formant coin 19 présente une surface cylindrique 20 épousant la forme extérieure du deuxième organe de serrage 11. Un organe formant coin 19 est disposé des deux côtés du corps de potence 2, ces deux organes formant coin étant reliés l'un à l'autre par une vis de serrage 21 qui est introduit dans un trou traversant lisse 22 pour coopérer avec un taraudage prévu dans l'autre organe formant coin, ce taraudage étant par exemple sous forme d'un écrou (non représenté) noyé dans la masse de celui-ci.

Pour le montage des premier et deuxième organes de serrage 10, 11, ainsi que des deux organes formant coin 19 à l'intérieur du logement 12, celui-ci est ouvert latéralement des deux côtés du corps de potence 2.

Pour fixer le tube pivot 4 à la potence 1, on desserre d'abord la vis de serrage 21pour déplacer les organes formant coin 19 vers l'extérieur en les éloignant l'un de l'autre de manière à créer un certain jeu entre les premier et deuxième organes de serrage 10, 11 afin de faciliter l'introduction du tube pivot 4 dans le logement 12.

Ensuite, il suffit d'introduire le tube pivot 4 dans le logement 12 jusqu'à ce qu'il vient en butée contre la paroi du logement, de régler l'inclinaison de la potence 1 grâce aux moyens d'articulation 8, et de serrer les premier et deuxième organes de serrage 10, 11 autour du tube pivot 4 en agissant sur la vis de serrage 21 qui déplace les organes formant coin 19 transversalement vers l'intérieur de manière à solliciter le deuxième organe de serrage 11 en direction du premier organe de serrage 10.

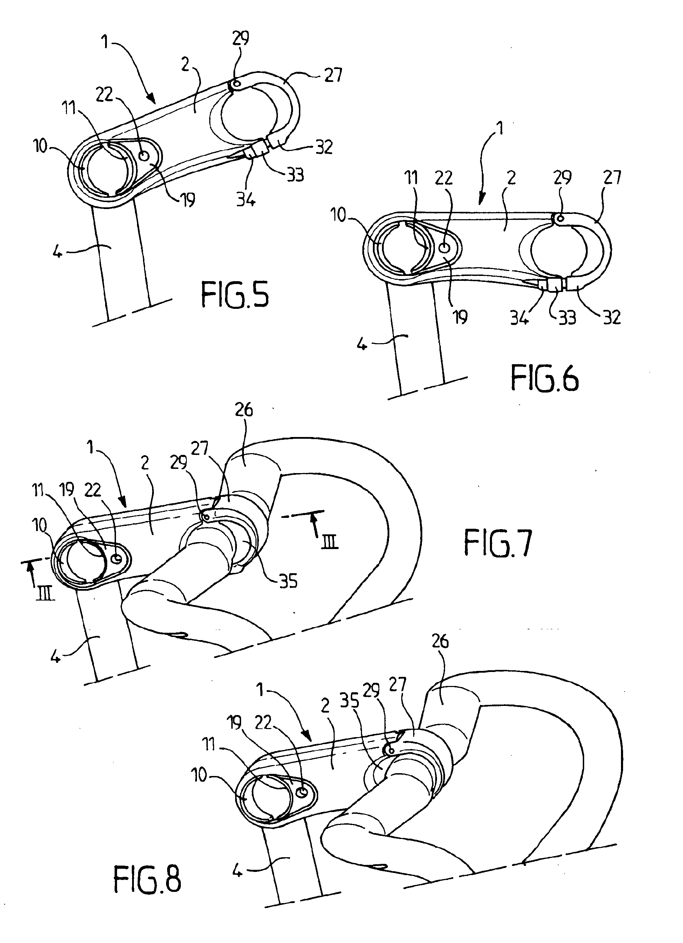

Bien entendu, l'ouverture 12' du logement 12 présente une forme allongée dans le sens axial du corps de potence 2 de manière à permettre un certain débattement angulaire de la potence 1 comme cela est illustré aux figures 5 et 6, la figure 5 montrant la position extrême haute et la figure 6 montrant la position extrême basse de la potence, avec un réglage en continu entre ces deux positions.

La longueur du tube pivot 4 est déterminée lors de la fabrication, mais la hauteur de la potence 1 au-dessus du tube de direction 6 peut être réglée à l'aide d'un insert annulaire 23 disposé entre ces deux éléments. Le cadre peut avantageusement être fourni avec un jeu d'inserts à épaisseurs différentes qui sur une partie de leur face tournée vers le haut présentent une forme incurvée adaptée à la forme extérieure de la partie du corps de potence 2 définissant l'articulation. De cette manière, la surface d'appui de la potence 1 sur l'insert 23 devient plus importante, ce qui contribue à la stabilité de l'ensemble.

L'extrémité avant du corps de potence 2 est pourvue de deuxièmes moyens de fixation 25 d'un guidon 26 à la potence 1. Ces deuxièmes moyens de fixation 25 comportent une chape en forme de U 27 qui à l'une de ses extrémités 28 est articulée sur le corps de potence 2 autour d'un axe 29 pour être rabattue sur un évidement 30 présentant une forme adaptée pour la réception du guidon 26, cet évidement étant prévu à l'extrémité avant du corps de potence 2. La chape en U porte à son extrémité opposée 31 des premiers moyens de liaison 32 aptes à être reliés à des deuxièmes moyens de liaison 33 prévus sur le corps de potence. Les premiers et deuxièmes moyens de liaison 32, 33 sont reliés les uns aux autres par une paire de vis de fixation 34, une vis de chaque côté.

Selon l'invention, la longueur de la potence peut être modifiée à l'aide d'une entretoise en forme de croissant 35 adaptée pour être disposée dans la forme en U de la chape 27 pour l'obtention d'une longueur réduite de la potence 1 ou dans l'évidement de réception 30 à l'extrémité du corps de potence 2 pour l'obtention d'une longueur plus importante. Grâce à ce dispositif, il est ainsi possible de rapprocher ou d'éloigner le guidon 26 du cycliste.

De préférence, une entretoise 35 de ce genre est disposée sur chaque côté latéral du corps de potence 2. Les deux entretoises sont reliées l'une à l'autre par des organes de liaison mâles 36 et des organes de liaison femelles 37 s'étendant transversalement vers l'intérieur pour coopérer les uns avec les autres en étant emboîtés les uns dans les autres. Ces entretoises 35 sont avantageusement maintenues ensemble par encliquetage des organes mâles et femelles 36, 37.

Du fait que le corps de potence 2 est après son montage sur le tube pivot 4 et après avoir reçu le guidon 26 fermé des deux côtés, c'est-à-dire d'un côté par le deuxième organe de serrage 11 et de l'autre côté par le guidon 26 logé dans l'évidement de réception 30, avec ou sans entretoise 35, il forme un boîtier étanche qui se trouve pratiquement intégré au cadre 7, ce qui permet un gain de rigidité, mais aussi une meilleure esthétique et une continuité des formes.

Est ainsi obtenue, grâce à l'invention, une potence de cycle permettant le réglage de sa hauteur, son inclinaison et sa longueur par des moyens extrêmement simples et fiables.

Bien entendu, l'invention n'est pas limitée aux exemples illustrés et décrits, et l'homme du métier sera en mesure de trouver des variantes sans pour autant sortir du cadre de l'invention.

## Revendications

1. Potence de cycle à inclinaison réglable, comprenant un corps de potence (2) dont l'une des extrémités est pourvue de premiers moyens de fixation (3) de la potence (1) à l'extrémité haute d'un tube pivot (4) et dont l'extrémité opposée est pourvue de deuxièmes moyens de fixation (25) d'un guidon (26) à la potence, lesdits premiers moyens de fixation (3) comprenant des moyens d'articulation (8) permettant de régler l'inclinaison de la potence (1), et des moyens de serrage (10, 11, 19, 21) permettant de bloquer la potence (1) en une position angulaire souhaitée, lesdits moyens de serrage comportant un premier et un deuxième organes de serrage (10, 11) de forme globalement hémicylindrique s'étendant dans un logement (12) présentant une ouverture (12') dirigée vers le bas afin d'y permettre l'introduction du tube pivot (4), lesdits premier et deuxième organes de serrage (10, 11) étant à leurs extrémités haute et basse respectives pourvus d'un évidement de réception (13, 14) adapté à la périphérie du tube pivot (4), **caractérisée en ce que** lesdits premier et deuxième organes de serrage (10, 11) s'étendent transversalement dans ledit logement (12) qui présente une paroi au moins partiellement cylindrique (15) coopérant avec ledit premier organe de serrage (10) afin de définir ensemble lesdits moyens d'articulation (8), **en ce qu'**un organe formant coin (19) est disposé des deux côtés du corps de potence et que les deux organes formant coin (19) sont reliés l'un à l'autre par une vis de serrage (21), et **en ce que** ledit deuxième organe de serrage (11) est sollicité vers ledit premier organe de serrage (10) par les deux organes formant coin (19) déplaçables transversalement dans ledit logement (12), et présentant chacun une surface d'appui cylindrique (20) épousant la forme extérieure dudit deuxième organe de serrage (11).

2. Potence de cycle selon la revendication 1, **caractérisée par le fait que** ledit logement (12) est ouvert latéralement des deux côtés du corps de potence (2).

3. Potence de cycle selon l'une quelconque des revendications précédentes, **caractérisée par le fait que** lesdits évidements de réception (13, 14) desdits premier et deuxième organes de serrage (10, 11) sont prolongés vers le haut respectivement vers le bas par un rebord saillant respectif (16, 17) définissant une surface d'appui élargie pour le tube pivot (4).

4. Potence de cycle selon la revendication 3, **caractérisée par le fait que** lesdits rebords (16, 17) font saillie dans une gorge (18) du logement (12) dans ladite au moins une partie cylindrique (15) de celui-ci de manière à constituer des moyens de blocage transversal desdits premier et deuxième organes de serrage (10, 11) lorsque le tube pivot (4) est introduit dans le logement (12) et serré entre lesdits organes de serrage.

5. Potence de cycle selon l'une quelconque des revendications précédentes, **caractérisée par le fait que** lesdits deuxièmes moyens de fixation (25) comportent une chape en forme de U (27) qui à l'une (28) de ses extrémités (28, 31) est articulée sur le corps de potence (2) pour être rabattue sur un évidement prévu à l'extrémité avant du corps de potence pour la réception du guidon (26) afin d'enserrer celui-ci, et qui à son extrémité opposée (31) porte des premiers moyens de liaison (32) aptes à être reliés à des deuxièmes moyens de liaison (33) prévus sur le corps de potence (2).

6. Potence de cycle selon la revendication 5, **caractérisée par le fait que** la longueur de la potence (1) peut être modifiée à l'aide d'au moins une entretoise (35) en forme de croissant disposée dans la forme en U de la chape (27) pour l'obtention d'une longueur réduite de la potence (1) ou dans ledit évidement de réception (30) à l'extrémité avant (28) du corps de potence (2) pour l'obtention d'une longueur plus importante.

7. Potence de cycle selon la revendication 6, **caractérisée par le fait qu'**une entretoise en forme de croissant (35) est disposée de chaque côté latéral du corps de potence (2) et en ce que les deux entretoises (35) sont reliées l'une à l'autre par des organes de liaison mâles et femelles (36, 37) s'étendant transversalement pour être emboîtés les uns dans les autres.

8. Potence de cycle selon la revendication 7, **caractérisée par le fait que** lesdits organes mâles et femelles (36, 37) sont retenus les uns dans les autres par encliquetage.

## Patentansprüche

1. Fahrradlenkervorbau mit einstellbarer Neigung, der einen Lenkervorbaukörper (2) umfasst, von dem eines der Enden mit ersten Befestigungsmitteln (3) des Lenkervorbaus (1) am oberen Ende eines Schwenkrohrs (4) ausgestattet ist und dessen entgegengesetztes Ende mit zweiten Befestigungsmitteln (25) eines Lenkers (26) am Lenkervorbau ausgestattet ist, wobei die ersten Befestigungsmittel (3) Gelenkmittel (8), die das Einstellen der Neigung des Lenkervorbaus (1) gestatten, und Spannmittel (10, 11, 19, 21), die das Blockieren des Lenkervorbaus (1) in einer gewünschten Winkelposition gestatten, umfassen, wobei die Spannmittel ein erstes und ein zweites Spannorgan (10, 11) allgemein halbzylindrischer Form umfassen, die sich in einer Aufnahme (12) erstrecken, die eine nach unten gerichtete Öffnung (12') aufweist, um dort das Einführen des Schwenkrohrs (4) zu gestatten, wobei das erste und zweite Spannorgan (10, 11) an ihren jeweiligen oberen und unteren Enden mit einer Aufnahmeaussparung (13, 14) ausgestattet sind, die an den Umfang des Schwenkrohrs (4) angepasst ist, **dadurch gekennzeichnet, dass** sich das erste und zweite Spannorgan (10, 11) quer in der Aufnahme (12) erstreckt, die eine mindestens zum Teil zylindrische Wand (15) aufweist, die mit dem ersten Spannorgan (10) zusammenarbeitet, um gemeinsam die Gelenkmittel (8) zu definieren, dass ein keilförmiges Organ (19) auf den beiden Seiten des Lenkervorbaukörpers angeordnet ist und dass die zwei keilförmigen Organe (19) mit einer Spannschraube (21) miteinander verbunden sind, und dass das zweite Spannorgan (11) gegen das erste Spannorgan (10) von den zwei quer in der Aufnahme (12) verlagerbaren keilförmigen Organen (19) beansprucht ist, die jeweils eine zylindrische Abstützfläche (20) aufweisen, die sich an die äußere Form des zweiten Spannorgans (11) anschmiegt.

2. Fahrradlenkervorbau nach Anspruch 1, **dadurch gekennzeichnet, dass** die Aufnahme (12) auf beiden Seiten des Lenkervorbaukörpers (2) seitlich geöffnet ist.

3. Fahrradlenkervorbau nach einem der vorangehenden Ansprüche, **dadurch gekennzeichnet, dass** die Aufnahmeaussparungen (13, 14) des ersten und zweiten Spannorgans (10, 11) nach oben beziehungsweise nach unten durch eine jeweilige abstehende Kante (16, 17) verlängert sind, die für das Schwenkrohr (4) eine erweiterte Stützfläche definiert.

4. Fahrradlenkervorbau nach Anspruch 3, **dadurch gekennzeichnet, dass** die Kanten (16, 17) in eine Nut (18) der Aufnahme (12) in dem mindestens einen zylindrischen Teil (15) derselben hineinragen, um Querblockademittel des ersten und zweiten Spannorgans (10, 11) zu bilden, wenn das Schwenkrohr (4) in die Aufnahme (12) eingeführt und zwischen den Spannorganen festgespannt ist.

5. Fahrradlenkervorbau nach einem der vorangehenden Ansprüche, **dadurch gekennzeichnet, dass** die zweiten Befestigungsmittel (25) eine U-förmige Abdeckung (27) aufweisen, die an einem (28) ihrer Enden (28, 31) auf dem Lenkervorbaukörper (2) angelenkt ist, um auf eine am vorderen Ende des Lenkervorbaukörpers für die Aufnahme des Lenkers (26) vorgesehene Aussparung heruntergeklappt zu sein, um diesen zu umschließen, und die an ihrem entgegengesetzten Ende (31) erste Verbindungsmittel (32) trägt, die mit zweiten, auf dem Lenkervorbaukörper (2) vorgesehenen Verbindungsmitteln (33) verbindbar sind.

6. Fahrradlenkervorbau nach Anspruch 5, **dadurch gekennzeichnet, dass** die Länge des Lenkervorbaus (1) mit Hilfe von mindestens einem mondsichelförmigen Abstandsstück (35) veränderbar ist, das in der U-Form der Abdeckung (27) angeordnet ist, um eine reduzierte Länge des Lenkervorbaus (1) zu erhalten, oder in der Aufnahmeaussparung (30) am vorderen Ende (28) des Lenkervorbaukörpers (2), um eine größere Länge zu erhalten.

7. Fahrradlenkervorbau nach Anspruch 6, **dadurch gekennzeichnet, dass** ein mondsichelförmiges Abstandsstück (35) auf jeder seitlichen Seite des Lenkervorbaukörpers (2) angeordnet ist und dass die zwei Abstandsstücke (35) miteinander durch männliche und weibliche Verbindungsorgane (36, 37) verbunden sind, die sich quer erstrecken, um ineinander eingeführt zu sein.

8. Fahrradlenkervorbau nach Anspruch 7, **dadurch gekennzeichnet, dass** die männlichen und weiblichen Organe (36, 37) durch Rasten ineinander gehalten werden.

## Claims

1. A bicycle handlebar stem with an adjustable incline, comprising a handlebar stem body (2), one of the ends of which is provided with first means (3) for fastening the handlebar stem (1) to the upper end of the pivot tube (4), and the opposite end of which is provided with second means (25) for fastening a handlebar (26) to the handlebar stem, said first fastening means (3) comprising articulation means (8) making it possible to adjust the incline of the handlebar stem (1), and tightening means (10, 11, 19, 21) making it possible to lock the handlebar stem (1) in a desired angular position, said tightening means comprising first and second tightening members (10, 11) with a globally semi-cylindrical shape extending in a housing (12) having an opening (12') oriented downward so as to allow the insertion of the pivot tube (4), said first and second tightening members (10, 11) being, at their respective upper and lower ends, provided with a receiving recess (13, 14) adapted to the periphery of the pivot tube (4), **characterized in that** said first and second tightening members (10, 11) extend transversely in said housing (12), which has a wall that is at least partially cylindrical (15) cooperating with said first tightening member (10) so as to define said articulation means (8) together, **in that** a corner-forming member (19) is positioned on both sides of the handlebar stem body and the two corner-forming members (19) are connected to one another by a tightening screw (21), and **in that** said second tightening member (11) is biased toward said first tightening member (10) by the two corner-forming members (19) transversely movable in said housing (12), and each having a cylindrical bearing surface (20) hugging the outer shape of said second tightening member (11).

2. The bicycle handlebar stem according to claim 1, **characterized in that** said housing (12) is laterally open on both sides of the handlebar stem body (2).

3. The bicycle handlebar stem according to any one of the preceding claims, **characterized in that** said receiving recesses (13, 14) of said first and second tightening members (10, 11) are extended upwardly, downwardly, respectively, by a respective protruding rim (16, 17) defining a wider bearing surface for the pivot tube (4).

4. The bicycle handlebar stem according to claim 3, **characterized in that** said rims (16, 17) protrude in a groove (18) of the housing (12) in said at least one cylindrical part (15) thereof so as to form transverse locking means for said first and second tightening members (10, 11) when the pivot tube (4) is inserted into the housing (12) and gripped between said tightening members.

5. The bicycle handlebar stem according to any one of the preceding claims, **characterized in that** said second fastening means (25) comprises a U-shaped yoke (27), one (28) of the ends (28, 31) of which is articulated on the handlebar stem body (2) to be folded down on a recess provided at the front end of the handlebar stem body to receive the handle part (26) in order to grip the latter, and its opposite end (31) supports connecting means (32) able to be connected to a second connecting means (33) provided on the handlebar stem body (2).

6. The bicycle handlebar stem according to claim 5, **characterized in that** the length of the handlebar stem (1) can be modified using at least one crescent-shaped spacer (35) positioned in the U shape of the yoke (27) in order to obtain a shorter length of the handlebar stem (1) or in said receiving recess (30) at the front end (28) of the handlebar stem body (2) in order to obtain a longer length.

7. The bicycle handlebar stem according to claim 6, **characterized in that** a crescent-shaped spacer (35) is positioned on each lateral side of the handlebar stem body (2) and **in that** the two spacers (35) are connected to one another by male and female connecting members (36, 37) extending transversely to be nested in one another.

8. The bicycle handlebar stem according to claim 7, **characterized in that** said male and female members (36, 37) are retained in one another by snapping.
